# EUROPEAN PATENT SPECIFICATION

(11) **EP 2 959 780 B1**
(45) Date of publication and mention of the grant of the patent: **07.11.2018**
(21) Application number: 15172931.6
(22) Date of filing: 19.06.2015
(51) Int. Cl.: A22C 11/04, A22C 11/06

(54) **STUFFING MACHINE**
FÜLLMASCHINE
MACHINE DE REMPLISSAGE

(30) Priority: 23.06.2014 IT PD20140160
(43) Date of publication of application: 30.12.2015
(73) Proprietor: Bortolato Massimo & C. S.A.S., 35010 Vigodarzere (PD) (IT)
(72) Inventor: Bortolato, Massimo, 35010 Vigodarzere PD (IT)
(74) Representative: Modiano, Micaela Nadia

(56) References cited:
- BE-A- 484 121
- FR-A- 923 090
- GB-A- 2 211 063
- US-A- 2 608 715

## Description

The present invention relates to a stuffing machine for making stuffed-meat products.

For the industrial production of sausages, electric stuffing machines are widely adopted, which are provided with an electric motor, while in delicatessens specializing in the sale of meats and derivatives, or in butcher's shops, manual stuffing machines are usually adopted.

Such manual stuffing machines comprise a reservoir for the minced meat with a frustum-shaped extrusion bottom ending with a spout onto which the end of the casing into which the minced meat is to be pushed is fitted.

A piston is arranged to operate inside the reservoir for the meat, and is pushed by an endless screw device which is actuated in turn by way of a manually actuated lever.

Such conventional machines usually operate when arranged on a work surface, and therefore in a horizontal configuration.

Such configuration for use is very inconvenient for the merchant, both because it takes up a work surface which cannot simultaneously be used for other activities, and also because such a stuffing machine requires two persons to use it: a person to actuate the manual lever and, at the other end, a person to hold the casing and arrange it in an orderly fashion as it is formed with the meat pushed out by the stuffing machine inside it.

Furthermore, since the actuation is manual, the production of, for example, sausages with such a machine involves times that inevitably vary greatly depending on the user.

A further drawback of conventional manual stuffing machines is constituted by the fact that actuation of the piston uses a mechanical device, with an endless screw, with a motor gearwheel rotated by a lever, such device needing to be kept suitably clean and also properly lubricated.

The cleaning and maintenance operations of such stuffing machines therefore require a certain amount of time from the user, with the lubrication operation requiring great care in order to prevent the lubricant from getting into the reservoir for the meat.

Known hydraulic meat-stuffing machines are disclosed in US 2 608 715 A, FR 923 090 A, and BE 484 121 A.

The aim of the present invention is to provide a stuffing machine for making stuffed-meat products, which is capable of overcoming the above mentioned limitations and drawbacks of the known art.

Within this aim, an object of the invention is to provide a stuffing machine that can be installed so as to take up less space than conventional manual stuffing machines.

Another object of the invention is to provide a stuffing machine that is easy to control and use, even by a single user.

Another object of the invention is to provide a stuffing machine that has greatly reduced maintenance needs with respect to conventional machines and which is simple to clean.

Another object of the invention is to provide a stuffing machine that can operate faster than conventional manual stuffing machines, while providing constant and repeatable levels of performance.

Another object of the invention is to provide a stuffing machine that is easy to use and is completely safe.

Another, particular object of the invention is to provide a stuffing machine inside which there is no electrical voltage, and which therefore is electrically safe as well.

In accordance with the invention, there is provided a stuffing machine for making stuffed-meat products as defined in the appended claims.

Further characteristics and advantages of the invention will become better apparent from the description of a preferred, but not exclusive, embodiment of the stuffing machine according to the invention, which is illustrated by way of non-limiting example in the accompanying drawings wherein:
- Figure 1 is a perspective view of a stuffing machine according to the invention in the loading configuration;
- Figure 2 is the same perspective view as Figure 1, in the operating configuration;
- Figure 3 is a schematic cross-sectional side view of the stuffing machine in the loading configuration, as per Figure 1;
- Figure 4 is the same schematic cross-sectional side view as Figure 3, in the operating configuration with the presser body raised;
- Figure 5 is the same schematic cross-sectional side view as Figures 3 and 4, in the operating configuration with the presser body lowered inside the reservoir;
- Figure 6 is a block diagram of the pneumatic system for actuating the pneumatic cylinder.

With reference to the figures, a stuffing machine for making stuffed-meat products, according to the invention, is generally designated with the reference numeral 10.

Such stuffing machine 10 comprises a frame 11, to be fixed to a wall, for supporting a pneumatic cylinder 12; such pneumatic cylinder 12 is arranged to operate vertically and is adapted to move a presser body 13 in a straight motion within a reservoir 14 for minced meat to be compressed and injected into a casing for making a stuffed-meat product such as sausage or the like.

The reservoir 14 has a substantially funnel-shaped extrusion bottom 15.

The pneumatic cylinder 12 is interconnected to a pneumatic system 16 for its actuation; such system is described in more detail hereinafter.

The frame 11 is constituted by a box-like body, for example made of sheet metal, with hooks 17 for hanging to corresponding brackets, which are fixed to a wall and are not shown for the sake of simplicity.

Inside the box-like body is a surface 18 which supports the pneumatic cylinder 12.

The presser body 13 is constituted by a disk which is fixed to the stem of the pneumatic cylinder 12, with perimetric rings for scraping the internal wall of the reservoir 14.

The front lower part, in the configuration for use, of the box-like body that defines the supporting frame 11, is provided with an opening 20 for accessing the reservoir 14.

Such opening 20 is partially closed by a door 21 for protecting the inlet 22 of the reservoir 14 in the operating configuration.

Such protective door 21 is pivoted to the frame 11 about a horizontal axis.

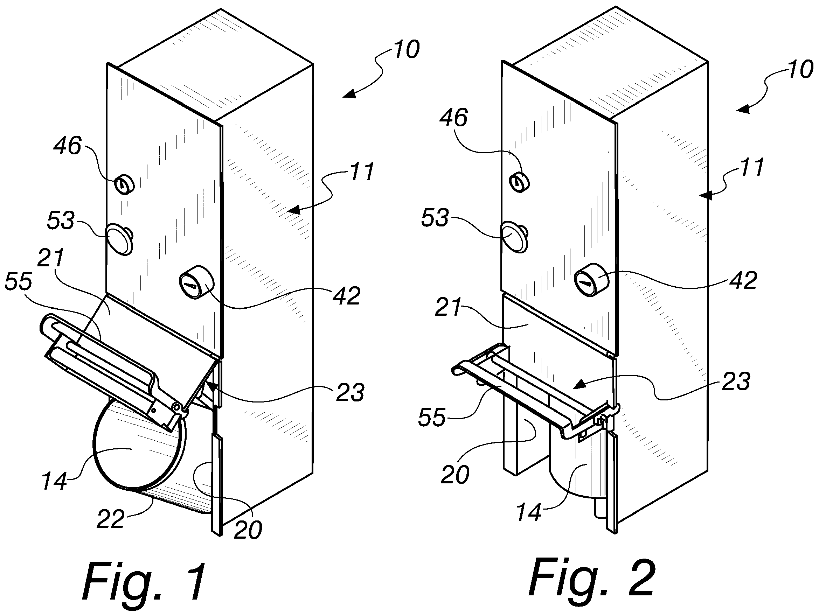

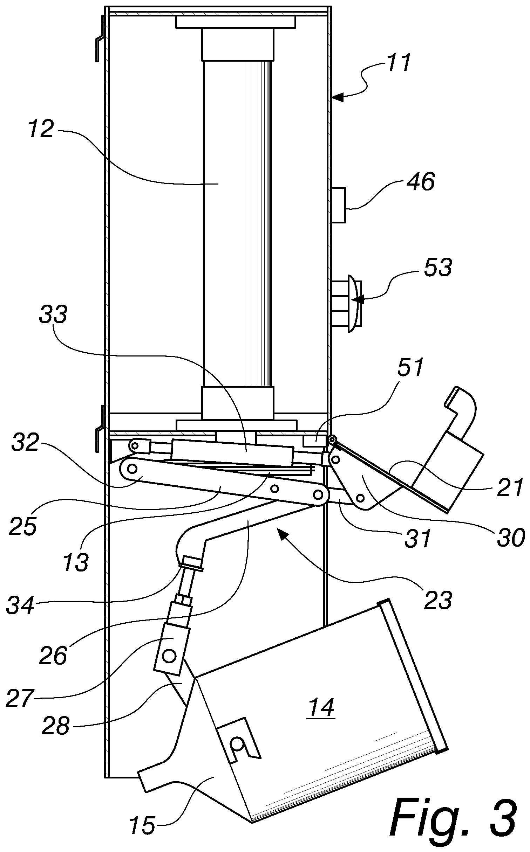

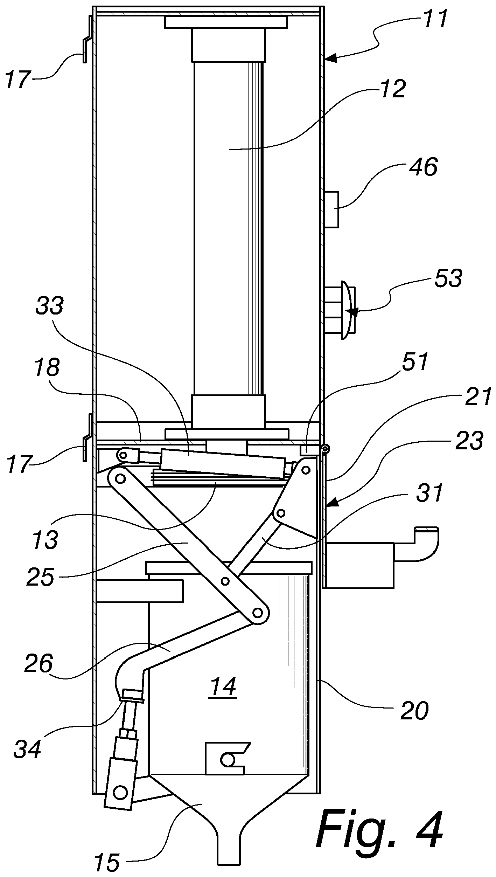

Figures 1 and 3 show the stuffing machine 10 with the door 21 open, while Figures 2 and 4 show the stuffing machine 10 with the door 21 closed.

The reservoir 14 can be moved from a loading configuration to an operating configuration, i.e. available to the presser body 13, by way of corresponding movement means 23.

Such movement means 23 for the reservoir 14 comprise a mechanism, the moving element of which is constituted by the protective door 21.

Such mechanism comprises an articulated quadrilateral, which is moved by the protective door 21 and is adapted to rotate a first lever system 25 to which a second lever system 26 is pivoted which is connected by way of a tension member 27 to a third lever system 28.

Such third lever system 28 is pivoted at one end to the tension member 27 while at the opposite end it is rigidly coupled to the reservoir 14, which rotates integrally with such third lever system 28.

The articulated quadrilateral comprises two mutually opposite brackets 30 which protrude from the protective door 21, to which are pivoted opposing symmetrical linkages 31, which are pivoted in opposition to the corresponding first lever system 25, i.e. to a corresponding lever arm, one end 32 of which is pivoted to the frame 11.

The movement of the articulated quadrilateral is provided by two opposing gas-operated springs 33.

The second lever system 26 is constituted by a fork-like element, with two lateral arms and a central flat portion 34 that rigidly joins them.

The tension member 27 is fixed, externally to the reservoir 14, to the central flat portion 34 of the second lever system 26.

The third lever system 28, to which the tension member 27 is pivoted, is constituted by a bar welded directly to the reservoir 14.

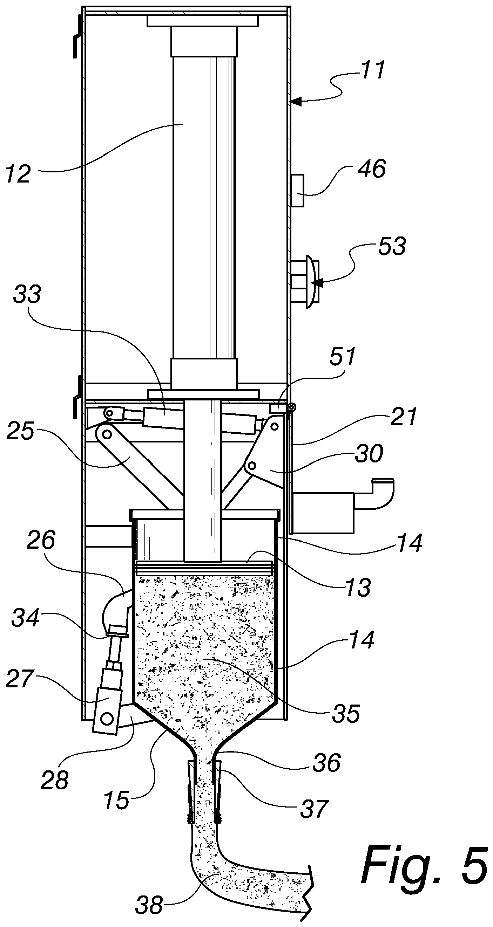

Figure 5 shows, for the purposes of example, a step of compressing the meat 35 inside the reservoir 14, with the presser body 13 pushing the meat 35 toward the output nozzle 36 in the bottom; a casing to be filled with meat is fitted over such nozzle, optionally by way of the interposition of an auxiliary sleeve 37.

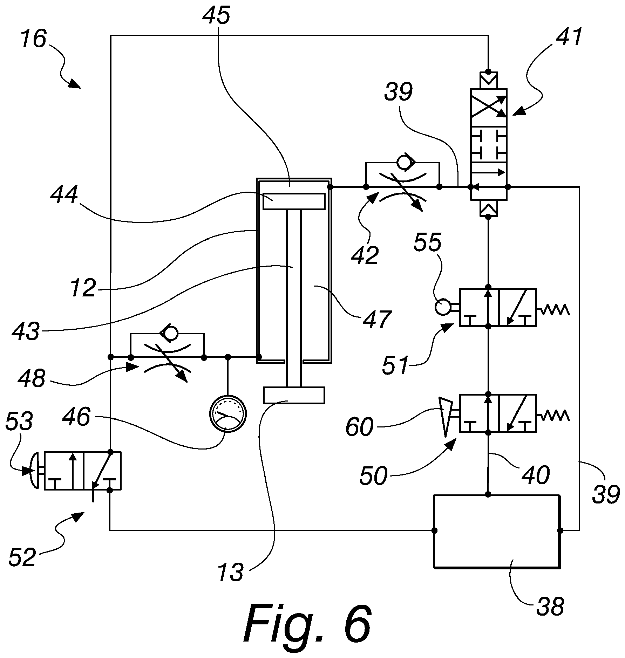

The pneumatic system 16 for actuating the pneumatic cylinder 12 is shown in detailed schematic form in Figure 6.

Such pneumatic system 16 is provided with a compressor 38 with a work line 39 and a control line 40.

The work line is adapted to convey compressed air to the pneumatic cylinder 12 in order to produce the outward movement of the stem 43; on such work line 39 there is a three-position valve 41, which is adapted to cause the flow of air toward the cylinder 12, or the connection to the discharge of the descent chamber 45 of the cylinder 12, or the closure of all the lines interconnected to the three-position valve 41.

Such three-position valve 41 is controlled by the control line 40.

Arranged between the three-position valve 41 and the cylinder 12 is a flow controller 42 for setting the pressure on the piston 44 of the pneumatic cylinder 12.

The work line also comprises a gauge 46 which is connected to the riser chamber 47 of the cylinder 12, for measuring the output pressure from the cylinder when the piston 44 is pushed downward, i.e. when the cylinder 12 is operating.

Downstream of the gauge 46 there is a second flow controller 48, which is designed to adjust the speed of descent of the piston 44 and therefore of the presser body 13.

The control line 40 is provided with a pedal-operated valve 50 for controlling the three-position valve 41 by way of a pedal 60 which can be arranged on the floor and is conveniently actuatable by the user without using his/her hands.

The pedal-operated valve 50 is followed by a safety valve 51, which is positioned in the frame 11 adjacent to the protective door 21, so that the closing of the door 21 causes the opening of the valve and the passage of the air that is needed to actuate the three-position valve on the work line 39.

Such safety valve 51 ensures that when the door 21 is open the cylinder 12 cannot be placed under pressure.

The protective door 21 can be moved by way of a handle 55.

The system is completed by a riser valve 52, which is controlled by a button 53; pressing the button 53 causes the riser valve 52 to be arranged so as to cause the redirection of the compressed air from the compressor 38 toward the riser chamber 47 and as a consequence the rise of the piston 44.

Use of the pedal 60 makes it possible to keep the compressor 38 separate from the supporting frame 11, the compressor 38 being the single component operated by electric power, there being no electrical components inside the frame 11, nor attached externally thereto.

The connection between the compressor and the remaining part of the pneumatic system should be understood as being provided with pipes of the required length and of conventional type.

The distance from the compressor, and therefore of the single component operated by electric power, from the frame 11 and from what is contained in it, makes it possible to wash the frame 11 both externally and internally, even with a water jet, it thus being possible to obtain a level of hygiene which is difficult to achieve in conventional stuffing machines.

Use of the stuffing machine 10 according to the invention is therefore the following.

The protective door 21 is opened; this produces the rotation of the reservoir 14 so as to exit, as in Figures 1 and 3, i.e. in an inclined configuration in which the inlet 22 of the reservoir 14 is accessible for loading.

The meat is loaded in the reservoir 14 and the protective door 21 is closed, with consequent actuation of the safety valve 51 which, with the door 21 closed, is set to allow the cylinder 12 to operate.

By acting on the pedal 60 the user controls the three-position valve 41 to allow the passage of compressed air to the descent chamber 45 of the cylinder 12, thus starting the compression action of the presser body 13 on the meat 35 inside the reservoir 14.

The user, without needing help from assistants, can totally autonomously actuate the stuffing machine 10 and at the same time use two hands to handle the casing being filled.

Once the operation to fill the casing is finished, the user releases the pedal 60 and presses the button 53 to make the piston 44 rise and hence to extract the presser body 13 from the reservoir 14, it now being possible to move such reservoir 14 and load it for a new operation.

In practice it has been found that the invention fully achieves the intended aim and objects.

In particular, with the invention a stuffing machine has been devised which can be installed so as to take up less space than conventional manual stuffing machines, thanks to the configuration for use, preferably vertical, which makes fixing to a wall possible; the wall fixing makes the stuffing machine according to the invention to be used without taking up space either on a work surface, or on the ground, with obvious advantages for the user in terms of available work spaces inside the shop where the machine is set up.

Furthermore, with the invention a stuffing machine has been devised which is easy to control and use even by a single user, thanks to the vertical operating position and to the pedal-operated control, which enables the user to have his/her hands free for handling the stuffed-meat product during filling.

Moreover, with the invention a stuffing machine has been devised which has greatly reduced maintenance needs compared to conventional machines and which is easy to clean, there being no gearwheels where dirt can be caught, and no parts to be lubricated.

Also, with the invention a stuffing machine has been devised which can operate faster than conventional manual stuffing machines, while providing constant and repeatable levels of performance, thanks to the pneumatic cylinder which is actuated by a compressor and to the adapted pneumatic system for controlling the cylinder and the machine generally.

Furthermore, with the invention a stuffing machine has been devised which can be thoroughly washed with a water jet in total safety, since there are no electrical components inside the supporting frame, and the single component operated by electric power is the compressor, which can be located at a distance from where the stuffing machine is used.

Finally, with the invention a stuffing machine has been devised which is easy to use and is completely safe.

The invention, thus conceived, is susceptible of numerous modifications and variations, all of which are within the scope of the appended claims. Moreover, all the details may be substituted by other, technically equivalent elements.

In practice the components and the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A stuffing machine (10) for making stuffed-meat products, comprising a supporting frame (11) and a pneumatic cylinder (12) which is supported by the supporting frame (11) and which is adapted to move a presser body (13) in a straight motion within a reservoir (14) for minced meat, said reservoir (14) having a substantially funnel-shaped extrusion bottom (15), said pneumatic cylinder (12) being interconnected to a pneumatic system (16) for its actuation, said frame (11) being constituted by a box-like body with hooks (17) for hanging, the front lower part, in the configuration for use, of said box-like body having an opening (20) for accessing the reservoir (14), said opening (20) being closed at least partially by a door (21) for protecting an inlet (22) of the reservoir (14) in the operating configuration, said reservoir (14) being movable from a loading configuration to an operating configuration, i.e, available to the presser body (13), by way of corresponding movement means (23), said movement means (23) for the reservoir (14) comprising a mechanism the moving element of which is constituted by the protective door (21).

2. The stuffing machine according to claim 1, **characterized in that** said presser body (13) is constituted by a disk which is fixed to a stem of said pneumatic cylinder (12), with perimetric rings for scraping an internal wall of the reservoir (14).

3. The stuffing machine according to one or more of the preceding claims, **characterized in that** said mechanism comprises an articulated quadrilateral, which is moved by said protective door (21) and is adapted to rotate a first lever system (25) to which a second lever system (26) is pivoted which is connected by way of a tension member (27) to a third lever system (28), said third lever system (28) being pivoted at one end to the tension member (27) while at the opposite end it is coupled rigidly to the reservoir (14), which rotates integrally with said third lever system (28),

4. The stuffing machine according to claim 2, **characterized in that** said pneumatic system (16) for the actuation of the pneumatic cylinder (12) has a compressor (38) with a work line (39) and a control line (40).

5. The stuffing machine according claim 4, **characterized in that** said work line (39) is adapted to convey compressed air to the pneumatic cylinder (12) in order to produce the outward movement of the stem (43), on said work line (39) there being a three-position valve (41), which is adapted to cause the flow of air toward the cylinder (12), or the connection to the discharge of a descent chamber (45) of the cylinder (12), or the closure of all the lines interconnected to said three-position valve (41), said three-position valve (41) being controlled by the control line (40).

6. The stuffing machine according to claim 5, **characterized in that** said control line (40) has a pedal-operated valve (50) for actuating said three-position valve (41) by way of a pedal (60), said pedal-operated valve (50) being followed by a safety valve (51), which is arranged in the frame (11) adjacent to the protective door (21), so that the closure of the door (21) causes the opening of the valve and the passage of the air that is needed to actuate the three-position valve on the work line (39).

7. The stuffing machine according to claim 6, **characterized in that** said pneumatic system (16) comprises a riser valve (52), actuated by means of a button (53), the pressing of said button (53) causing the riser valve (52) to be arranged so as to cause the redirection of the compressed air from the compressor (38) toward a riser chamber (47) of said pneumatic cylinder (12) and consequently cause the rise of the piston (44).

## Patentansprüche

1. Eine Füllmaschine (10) zum Herstellen von Wurstwaren, die einen tragenden Rahmen (11) und einen Pneumatikzylinder (12) umfasst, der von dem tragenden Rahmen (11) getragen und ausgebildet ist, um einen Presserkörper (13) in einer geraden Bewegung innerhalb eines Behälters (14) für Hackfleisch zu bewegen, wobei der Behälter (14) einen im Wesentlichen trichterförmigen Extrusionsboden (15) hat, wobei der Pneumatikzylinder (12) mit einem Pneumatiksystem (16) für seinen Antrieb verbunden ist, wobei der Rahmen (11) aus einem kastenartigen Körper mit Haken (17) zum Hängen besteht, wobei der untere vordere Teil des kastenartigen Körpers in der Gebrauchsanordnung eine Öffnung (20) für den Zugang zum Behälter (14) hat, wobei die Öffnung (20) in der Arbeitsanordnung zumindest teilweise durch eine Tür (21) zum Schützen eines Einlasses (22) des Behälters (14) geschlossen wird, wobei der Behälter (14) mit Hilfe entsprechender Bewegungsmittel (23) aus einer Ladeanordnung in eine Arbeitsanordnung beweglich, d. h. für den Presserkörper (13) verfügbar, ist, wobei die Bewegungsmittel (23) für den Behälter (14) einen Mechanismus umfassen, dessen Bewegungselement aus der Schutztür (21) besteht.

2. Die Füllmaschine gemäß Anspruch 1, **dadurch gekennzeichnet, dass** der Presserkörper (13) aus einer Scheibe besteht, die an einem Schaft des Pneumatikzylinders (12) befestigt ist, mit Umfangsringen zum Abschaben einer Innenwand des Behälters (14) .

3. Die Füllmaschine gemäß einem oder mehreren der obigen Ansprüche, **dadurch gekennzeichnet, dass** der Mechanismus ein gelenkiges Viereck umfasst, das durch die Schutztür (21) bewegt wird und ausgebildet ist, um ein erstes Hebelsystem (25) zu drehen, mit dem ein zweites Hebelsystem (26) drehgelenkig verbunden ist, das über ein Spannungsglied (27) mit einem dritten Hebelsystem (28) verbunden ist, wobei das dritte Hebelsystem (28) an einem Ende drehgelenkig mit dem Spannungsglied (27) verbunden ist, während es am gegenüberliegenden Ende starr mit dem Behälter (14) gekoppelt ist, der sich integral mit dem dritten Hebelsystem (28) dreht.

4. Die Füllmaschine gemäß Anspruch 2, **dadurch gekennzeichnet, dass** das Pneumatiksystem (16) für den Antrieb des Pneumatikzylinders (12) einen Kompressor (38) mit einer Arbeitsleitung (39) und einer Steuerungsleitung (40) hat.

5. Die Füllmaschine gemäß Anspruch 4, **dadurch gekennzeichnet, dass** die Arbeitsleitung (39) ausgebildet ist, um Druckluft an den Pneumatikzylinder (12) zu befördern, um die Auswärtsbewegung des Schafts (43) zu erzeugen, wobei sich an der Arbeitsleitung (39) ein Dreistellungsventil (41) befindet, das ausgebildet ist, um die Strömung von Luft zum Zylinder (12) hin oder den Anschluss des Ablasses einer Abwärtshubkammer (45) des Zylinders (12) oder das Verschließen aller Leitungen, die mit dem Dreistellungsventil (41) verbunden sind, zu veranlassen, wobei das Dreistellungsventil (41) von der Steuerungsleitung (40) gesteuert wird.

6. Die Füllmaschine gemäß Anspruch 5, **dadurch gekennzeichnet, dass** die Steuerungsleitung (40) ein pedalbetätigtes Ventil (50) für die Betätigung des Dreistellungsventils (41) durch ein Pedal (60) hat, wobei das pedalbetätigte Ventil (50) von einem Sicherheitsventil (51) gefolgt ist, das in dem Rahmen (11) angrenzend an die Schutztür (21) angeordnet ist, so dass das Verschließen der Tür (21) das Öffnen des Ventils und den Durchstrom der Luft verursacht, die benötigt wird, um das Dreistellungsventil an der Arbeitsleitung (39) zu betätigen.

7. Die Füllmaschine gemäß Anspruch 6, **dadurch gekennzeichnet, dass** das Pneumatiksystem (16) ein Steigerventil (52) umfasst, das durch einen Knopf (53) betätigt wird, wodurch das Drücken des Knopfs (53) eine solche Anordnung des Steigerventils (52) veranlasst, dass die Umlenkung der Druckluft vom Kompressor (38) zu einer Aufwärtshubkammer (47) des Pneumatikzylinders (12) und folglich der Anstieg des Kolbens (44) verursacht wird.

## Revendications

1. Machine de remplissage (10) pour fabriquer des produits remplis de viande, comprenant un bâti de support (11) et un cylindre pneumatique (12) qui est supporté par le bâti de support (11) et qui est adapté pour déplacer un corps presseur (13) dans un mouvement rectiligne à l'intérieur d'un réservoir (14) pour de la viande hachée, ledit réservoir (14) ayant une partie inférieure d'extrusion sensiblement en forme d'entonnoir (15), ledit cylindre pneumatique (12) étant relié à un système pneumatique (16) en vue de son actionnement, ledit bâti (11) étant constitué par un corps en forme de boîte muni de crochets (17) afin d'être suspendu, la partie inférieure avant, dans la configuration d'utilisation, dudit corps en forme de boîte comportant une ouverture (20) pour accéder au réservoir (14), ladite ouverture (20) étant fermée au moins partiellement par une porte (21) destinée à protéger une entrée (22) du réservoir (14) dans la configuration de fonctionnement, ledit réservoir (14) pouvant se déplacer depuis une configuration de chargement vers une configuration de fonctionnement, c'est-à-dire, qu'il est accessible au corps presseur (13), grâce à un moyen de déplacement correspondant (23), ledit moyen de déplacement (23) du réservoir (14) comprenant un mécanisme dont l'élément mobile est constitué par la porte de protection (21).

2. Machine de remplissage selon la revendication 1, **caractérisée en ce que** ledit corps presseur (13) est constitué par un disque qui est fixé à une tige dudit cylindre pneumatique (12), avec des anneaux périmétriques pour racler une paroi interne du réservoir (14).

3. Machine de remplissage selon l'une ou plusieurs des précédentes revendications, **caractérisée en ce que** ledit mécanisme comprend un quadrilatère articulé, qui est déplacé par ladite porte de protection (21) et est adapté pour faire tourner un premier système de levier (25) sur lequel peut pivoter un second système de levier (26) qui est relié au moyen d'un élément de tension (27) à un troisième système de levier (28), ledit troisième système de levier (28) étant articulé au niveau d'une extrémité sur l'élément de tension (27) alors qu'à l'extrémité opposée, il est couplé rigidement au réservoir (14), qui tourne d'un seul tenant avec ledit troisième système de levier (28).

4. Machine de remplissage selon la revendication 2, **caractérisée en ce que** ledit système pneumatique (16) pour l'actionnement du cylindre pneumatique (12) comprend un compresseur (38) ayant une ligne de travail (39) et une ligne de commande (40).

5. Machine de remplissage selon la revendication 4, **caractérisée en ce que** ladite ligne de travail (39) est adaptée pour transporter de l'air comprimé jusqu'au cylindre pneumatique (12) afin de produire le mouvement de la tige (43) vers l'extérieur, sur ladite ligne de travail (39) est prévue une soupape à trois directions (41), qui est adaptée pour amener l'écoulement d'air vers le cylindre (12), ou la connexion à la décharge d'une chambre de descente (45) du cylindre (12), ou la fermeture de toutes les lignes reliées à ladite soupape à trois directions (41), ladite soupape à trois directions (41) étant commandée par la ligne de commande (40).

6. Machine de remplissage selon la revendication 5, **caractérisée en ce que** ladite ligne de commande (40) comprend une soupape à pédale (50) pour actionner ladite soupape à trois directions (41) au moyen d'une pédale (60), ladite soupape à pédale (50) étant suivie par une soupape de sûreté (51), qui est disposée dans le bâti (11) de façon adjacente à la porte de protection (21), de sorte que la fermeture de la porte (21) provoque l'ouverture de la soupape et le passage de l'air qui est nécessaire pour actionner la soupape à trois directions sur la ligne de travail (39).

7. Machine de remplissage selon la revendication 6, **caractérisée en ce que** ledit système pneumatique (16) comprend une soupape de montée (52), actionnée au moyen d'un bouton (53), l'appui sur ledit bouton (53) amenant la soupape de montée (52) à être placée de manière à causer la redirection de l'air comprimé venant du compresseur (38) vers une chambre de montée (47) dudit cylindre pneumatique (12) et entraîne en conséquence la montée du piston (44).
